(19) Europäisches Patentamt

European Patent Office

Office européen des brevets

(11) Veröffentlichungsnummer: **0 448 003 A1**

(12) **EUROPÄISCHE PATENTANMELDUNG**

(21) Anmeldenummer: **91104119.2**

(22) Anmeldetag: **16.03.91**

(51) Int. Cl.⁵: **B65G 1/08**

(30) Priorität: **21.03.90 DE 9003313 U**

(43) Veröffentlichungstag der Anmeldung:
**25.09.91 Patentblatt 91/39**

(84) Benannte Vertragsstaaten:
**AT BE CH DE ES FR GB IT LI NL SE**

(71) Anmelder: **Fritz Schäfer Gesellschaft mit beschränkter Haftung**
**Fritz-Schäfer-Strasse 20**
**W-5908 Neunkirchen(DE)**

(72) Erfinder: **Schäfer, Gerhard**
**Oberes Gerstenfeld 2**
**W-5908 Neunkirchen(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**W-5900 Siegen 1(DE)**

(54) **Befestigungs- und/oder Haltevorrichtung für Röllchenleisten auf Trägerschienen oder dergleichen, insbesondere von Durchlaufregalen.**

㊼ Vorgeschlagen wird eine Befestigungs- und/oder Haltevorrichtung 6a bzw. 6b für Röllchenleisten 5 auf quer dazu verlaufenden Trägerschienen 1a und 1b, insbesondere in Durchlaufregalen. Sie besteht aus in Längsrichtung der Trägerschienen 1a und 1b verlaufenden und an diesen festlegbaren Rasterleisten 10a und 10b, auf denen die Röllchenleisten 5 mit ihren Enden in vorgegebenen Rasteingriffen 11 festlegbar sind, wobei die Rasteingriffe 11 an der Rasterleiste 10a und 10b eine in deren Längsrichtung gleichmäßig verteilte Anordnung haben.

Zur einfachen aber trotzdem funktionssicheren Festlegung der Röllchenleisten 5 wird zwischen jeder Rasterleiste 10a und 10b und dem ihr zugeordneten Ende jeder Röllchenleiste 5 ein Kopfstück 13a oder 13b vorgesehen. Jedes Kopfstück 13a oder 13b trägt an seiner Unterseite mehrere Rastvorsprünge 14, deren Abstand voneinander jeweils einem ganzzahligen Mehrfachen des Abstandes zwischen zwei benachbarten Rasteingriffen 11 in der Rasterleiste 10a oder 10b entspricht. Jedes Kopfstück 13a oder 13b wird über seine Rastvorsprünge 14 mit beliebig auswählbaren Rasteingriffen 11 der Rasterleiste 10a oder 10b in lösbaren Halteeingriff gebracht und ist darin über die Breite der Rasterleiste 10a oder 10b hinweg verschiebbar geführt. Jedes Kopfstück 13a und 13b ist andererseits oberhalb der Rastvorsprünge 14 mit Kupplungseingriffen 17, 19 für ein Ende einer Röllchenleiste 5 versehen, die einen Queranschlag 18 für eine Endkante des Bodens der Röllchenleiste 5 aufweisen.

FIG. 1

Gegenstand der Neuerung ist eine Befestigungs- und/oder Haltevorrichtung für Röllchenleisten auf quer dazu verlaufenden Trägerschienen oder dergleichen, insbesondere von Durchlaufregalen.

Die Neuerung betrifft dabei Befestigungs- und/oder Haltevorrichtungen derjenigen Art, die aus in Längsrichtung der Trägerschienen oder dergleichen verlaufenden und an diesen festlegbaren Rasterleisten bestehen, auf denen die Röllchenleisten mit ihren Enden in vorgegebenen Rasteingriffen festlegbar sind, wobei die Rasteingriffe an der Rasterleiste eine in deren Längsrichtung - vorzugsweise gleichmäßig -verteilte Anordnung haben.

Befestigungs- und/oder Haltevorrichtungen für Röllchenleisten auf Trägerschienen von Durchlaufregalen sind bereits in verschiedenen Ausführungsformen bekannt, wie bspw. dem DE-GM 85 00 141 und dem DE-GM 87 04 612 zu entnehmen ist.

Bei der Befestigungs- und/oder Haltevorrichtung nach dem DE-GM 85 00 141 sind die Rasteingriffe zur Festlegung der Röllchenleisten-Enden unmittelbar an bzw. in einem waagerechten Schenkel der Trägerschiene vorgesehen und wirken mit einem Verbindungselement aus Kunststoff zusammen, welches jeweils auf das festzulegende Ende der Röllchenleiste aufgesteckt wird.

Ein Nachteil dieses Standes der Technik liegt darin, daß die als Unterstützung für die Röllchenleisten dienenden Trägerschienen der Durchlaufregale oder dergleichen von vornherein für die Benutzung der Befestigungs- und/oder Haltevorrichtung vorbereitet, nämlich mit den Rasteingriffen versehen sein müssen.

Ein weiterer Nachteil dieser bekannten Befestigungs-und/oder Haltevorrichtung liegt darin, daß auch das Zusammenwirken der Verbindungselemente mit den Enden der Röllchenleisten von einer gegenseitigen Abstimmung der zusammenwirkenden Kupplungsmittel abhängig ist, weil die aufrechten Schenkel der im Querschnitt U-förmigen Verbindungselemente über Rasthaken mit Längswulsten an den freien Enden der U-Schenkel der Röllchenleisten in Wirkverbindung treten.

Diese Nachteile sind zwar bei einer Befestigungs- und/oder Haltevorrichtung nach DE-GM 87 04612 vermieden, weil dort in Längsrichtung der Trägerschienen oder dergleichen verlaufende und an diesen festlegbare Rasterleisten Verwendung finden, auf denen die Röllchenleisten mit ihren Enden in vorgegebenen Rasteingriffen unabhängig von einer besonderen Ausgestaltung der Röllchenleisten festlegbar sind.

Nachteilig bei dieser bekannten Befestigungs- und/oder Haltevorrichtung ist jedoch, daß die Röllchenleisten sich auf den Rasterleisten in ihrer Längsrichtung um ein Maß verschieben können, welches zumindest einendig ein Entkuppeln der Röllchenleisten mit den Rasteingriffen ermöglicht, so daß sich unerwünschte Verlagerungen derselben auch in Seitwärtsrichtung einstellen können, die dann zumindest Betriebsstörungen an den Durchlaufregalen oder dergleichen zur Folge haben.

Ziel der Neuerung ist es, die Nachteile der bekannten Befestigungs- und/oder Haltevorrichtungen zu beseitigen. Deshalb liegt ihr die Aufgabe zugrunde, eine gattungsgemäße Befestigungs- und/oder Haltevorrichtung für Röllchenleisten auf Trägerschienen oder dergleichen anzugeben, die sich jederzeit - also auch nachträglich noch - problemlos in Gebrauch nehmen läßt, dabei aber zugleich auch einem unerwünschten Entkuppeln der Röllchenleisten von den Trägerschienen oder dergleichen entgegenwirkt.

Gelöst wird diese Aufgabe neuerungsgemäß grundsätzlich durch die Kennzeichnungsmerkmale des Anspruchs 1 dadurch, daß zwischen der Rasterleiste und dem ihr zugeordneten Ende jeder Röllchenleiste ein Kopfstück vorgesehen ist, daß jedes Kopfstück an seiner Unterseite mehrere Rastvorsprünge trägt, deren Abstand voneinander jeweils einem ganzzahligen Mehrfachen des Abstandes zwischen zwei benachbarten Rasteingriffen in der Rasterleiste entspricht, daß jedes Kopfstück über seine Rastvorsprünge mit beliebig auswählbaren Rasteingriffen der Rasterleiste in lösbaren Halteeingriff bringbar sowie darin über die Breite der Rasterleiste hinweg verschiebbar geführt ist, und daß jedes Kopfstück andererseits oberhalb der Rastvorsprünge mit Kupplungseingriffen für ein Ende einer Röllchenleiste versehen ist, die einen Queranschlag für eine Endkante der Röllchenleiste aufweisen.

Der besondere Vorteil einer neuerungsgemäßen Befestigungs- und/oder Haltevorrichtung für Röllchenleisten liegt darin, daß letztere selbst dann ihre Einbaulage funktionssicher beibehalten, wenn sie sich zwischen den sie haltenden Trägerschienen in einem begrenzten Maße in ihrer Längsrichtung verschieben können.

Besonders eignet sich eine neuerungsgemäße Befestigungs- und/oder Haltevorrichtung für die Benutzung bei Trägerschienen mit einem mindestens etwa L-förmigen Profil, auf deren waagerechtem Schenkel die die Enden der Röllchenleisten tragende Rasterleiste festgelegt ist.

In einem solchen Falle ist es neuerungsgemäß nach Anspruch 2 wesentlich, daß die Rasterleiste über ein an ihrer Unterseite vorgesehenes, hakenförmiges Klemmprofil mit dem waagerechten Trägerschenkel kuppelbar ist, daß die Länge der mit der Rasterleiste kuppelbaren Kopfstücke kleiner als der Abstand zwischen der äußeren Längskante der Rasterleiste und der Innenfläche des aufrechten Schenkels des etwa L-förmigen Trägerschienenprofils bemessen ist, daß jedes Kopfstück oberseitig einen hakenförmigen Klemmlappen als Halteeingriff für ein Ende einer Röllchenleiste trägt, dessen freier Hakenschenkel sich in entgegengesetzter
Richtung zum freien Hakenschenkel des Klemmprofils der Rasterleiste erstreckt, daß jedes Kopfstück auf der Rasterleiste um ein Maß querverschiebbar ist, welches die Eingrifftiefe seines hakenförmigen Klemmlappens in das Ende der Röllchenleiste unterschreitet, und daß jede Röllchenleiste eine Länge aufweist, welche mindestens um
den doppelten Verschiebeweg eines Kopfstücks
auf einer Rasterleiste kürzer bemessen ist, als der
lichte Abstand zwischen den Innenflächen der aufrechten Schenkel zweier sich gegenüberliegender
Trägerschienenprofile.

Wenn bei einere solchen neuerungsgemäßen
Ausgestaltung dafür gesorgt ist, daß die Klemmkraft des hakenförmigen Klemmlappens der Kopfstücke an den Röllchenleisten größer bemessen ist
als die sich zwischen den Rastvorsprüngen der
Kopfstücke und den Rasteingriffen der Rasterleiste
einstellenden Reibungswiderstände, dann ist einem
unerwünschten Entkuppeln der Röllchenleisten im
Bereich der Befestigungs- und/oder Haltevorrichtung wirksam begegnet.

Bewährt hat es sich nach der Neuerung, wenn
gemäß Anspruch 3 Rasterleisten und Kopfstücke
aus bruchfestem Kunststoffmaterial bestehen. Als
besonders vorteilhaft hat sich dabei herausgestellt,
wenn die Rasterleiste aus Polypropylen gefertigt
ist, während die Kopfstücke aus Polyamid bestehen.

Nach Anspruch 4 sieht die Neuerung vor, daß
die Rasteingriffe der Rasterleiste aus hinterschnitten profilierten, oberseitig offenen Nuten bestehen,
während die Rastvorsprünge an den Kopfstücken
von im Querschnitt hierzu komplementär gestalteten, unterseitigen Profilstegen gebildet sind. Rasteingriffe und Rastvorsprünge können dabei jeweils Hinterschneidungsbereiche mit kreisbogenförmiger Begrenzung aufweisen, wobei es sich
nach Anspruch 6 als besonders vorteilhaft herausgestellt hat, wenn der Abstand zwischen den Rastvorsprüngen an den Kopfstücken vier Teilungsabständen der Rasteingriffe der Rasterleiste entspricht.

Als besonders vorteilhaft hat sich eine neuerungsgemäße Weiterbildung erwiesen, die nach
Anspruch 7 dadurch gekennzeichnet ist, daß mindestens ein Kopfstück jedes mit einer Röllchenleiste kuppelbaren Kopfstückpaares an seiner Unterseite mindestens einen zu den Rastvorsprüngen
parallelen Schnapphaken trägt, der mit einer
Längskante der Rasterleiste einen Schubweg-Begrenzungsanschlag für das Kopfstück relativ zur
Rasterleiste bildet, und zwar dann, wenn beide
Kopfstücke des betreffenden Kopfstück-Paares ordnungsgemäß mit den voneinander abgewendeten
Enden der Röllchenleiste in Eingriff stehen.

Wichtig ist nach der Neuerung weiterhin, wenn
gemäß Anspruch 8 der Schnapphaken im Bereich
eines Rasteingriffs der Rasterleiste liegt und in
diesem mit in Richtung von der Unterseite des
Kopfstückes weg wirkender Federvorspannung aufgenommen ist. Wird in diesem Falle die Röllchenleiste nach Kupplung mit beiden Kopfstücken des
zugehörigen Kopfstück-Paares in Richtung einer
vorgegebenen Funktionsstellung verschoben, dann
gelangt der Schnapphaken selbsttätig zur Wirkung
und fixiert als Schubweg-Begrenzungsanschlag betreffende Funktionsstellung der Röllchenleiste.

Bewährt hat sich zu diesem Zweck, wenn nach
Anspruch 9 das freie Ende des Schnapphakens
dem freien Ende des hakenförmigen Klemmlappens am Kopfstück zugeordnet ist, weil hierdurch
die bauliche Ausgestaltung des betreffenden Kopfstückes vereinfacht wird.

Eine Befestigungs- und/oder Haltevorrichtung
für Röllchenleisten auf Trägerschienen von Durchlaufregalen zeichnet sich neuerungsgemäß nach
Anspruch 10 schließlich auch noch dadurch aus,
daß sie der Entnahmeseite des Durchlaufregals zugeordneten Enden der Röllchenleisten über ihr
Kopfstück gegen den aufrechten L-Schenkel der
dortigen Trägerschiene abgestützt sind, während
die der Beschickungsseite zugeordneten Enden
der Röllchenleisten über ihr Kopfstück und dessen
Schnapphaken im Abstand vom aufrechten L-
Schenkel der benachbarten Trägerschiene lösbar
lagerfixiert sind.

In der Zeichnung ist ein Ausführungsbeispiel
des Gegenstandes der Neuerung dargstellt. Es zeigen

Figur 1     teilweise im Schnitt und teilweise in
            Seitenansicht eine Befestigungs-
            und/oder Haltevorrichtung für Röll-
            chenleisten auf Trägerschienen ei-
            nes Durchlaufregals,

Figur 2     einen Schnitt enlang der Linie II-II in
            Fig. 1,

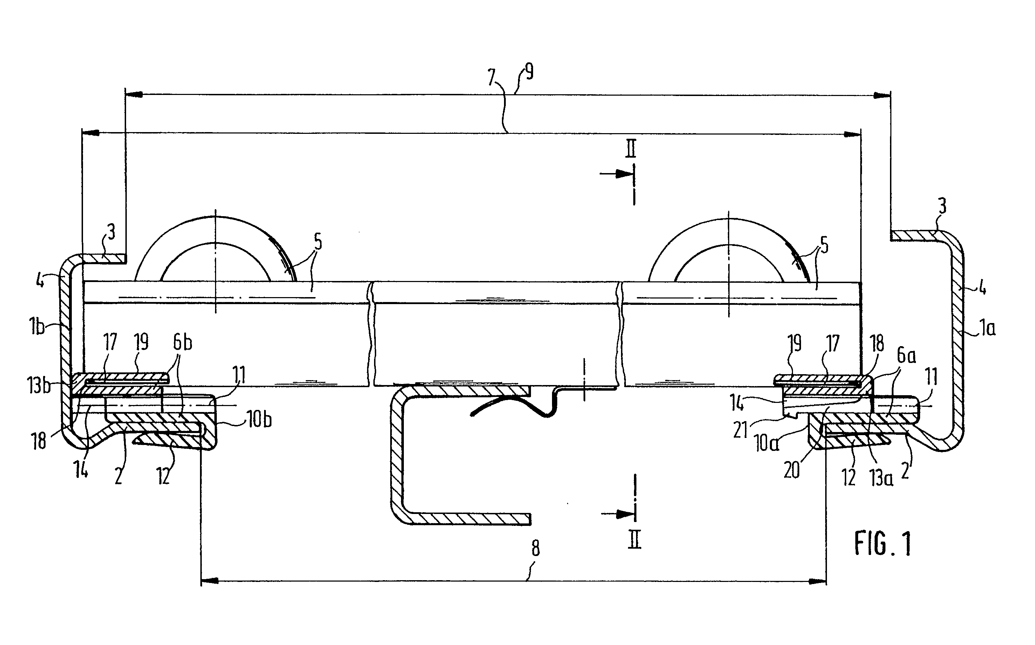

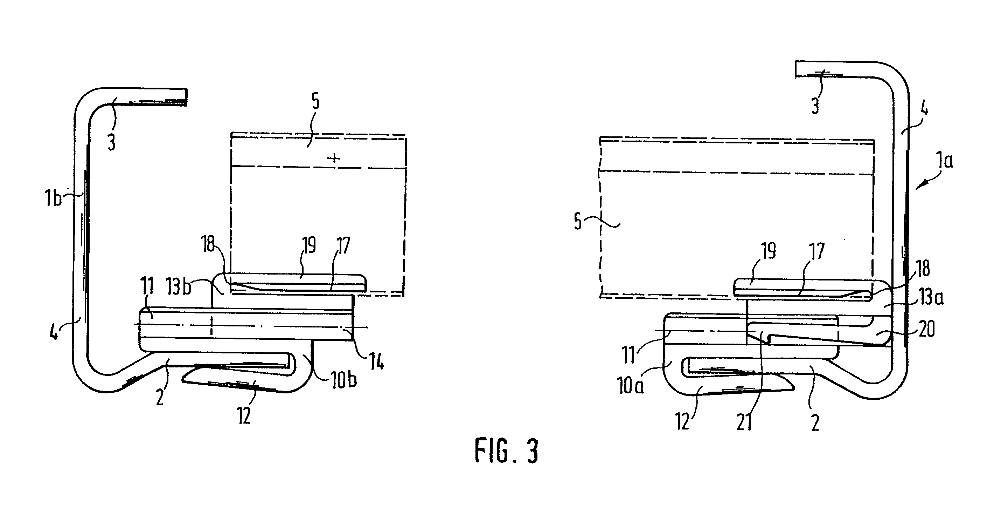

Figur 3     in größerem Maßstab die Endbereiche der Befestigungs- und/oder Haltevorrichtung nach Fig. 1 bei einer
            Einbau-Zwischenstellung der Röllchenleiste,

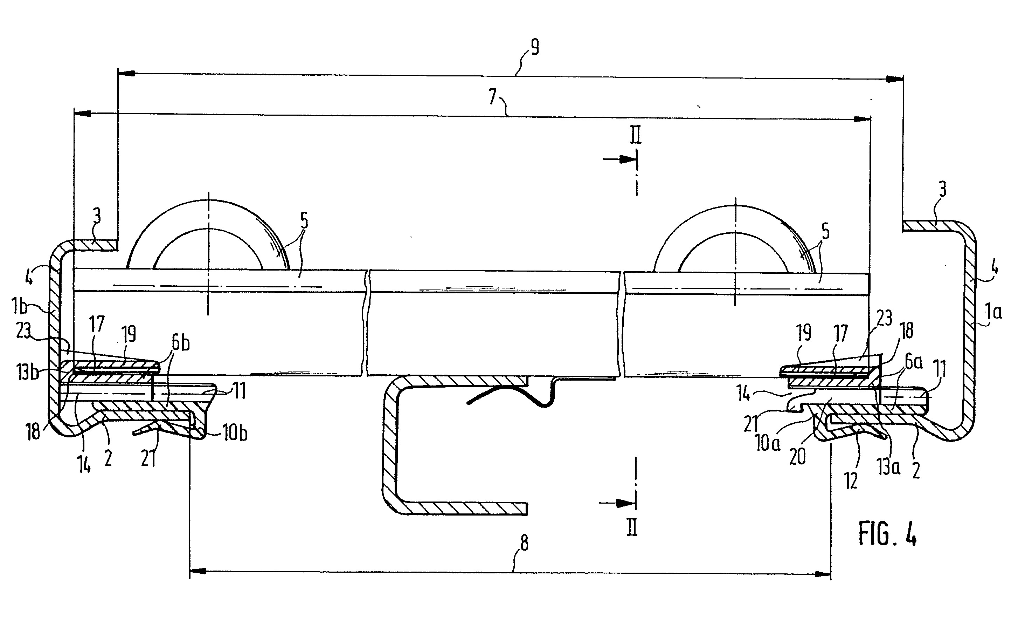

Figur 4     die Darstellung der Fig. 1 in etwas
            abgewandelter Ausführung,

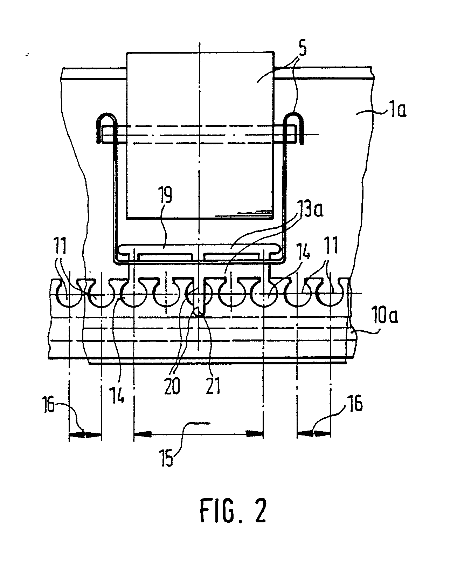

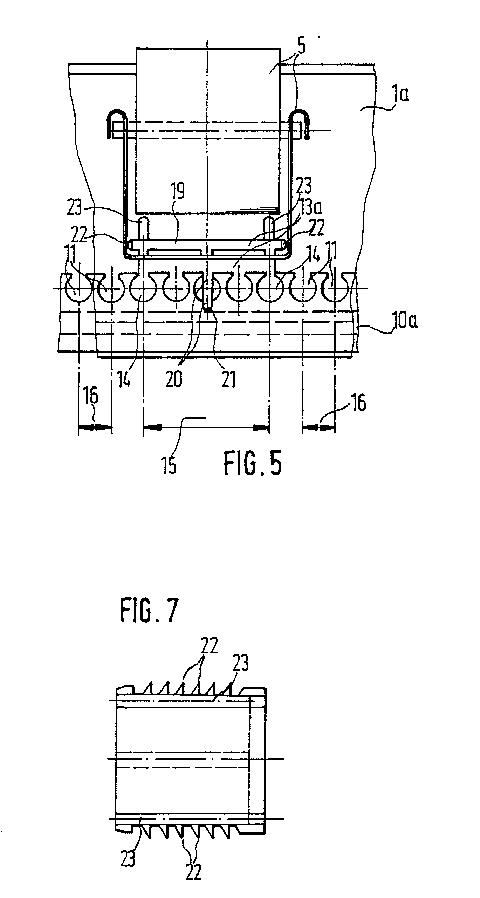

Figur 5     die Darstellung der Fig. 2 in etwas
            abgewandelter Ausführung,

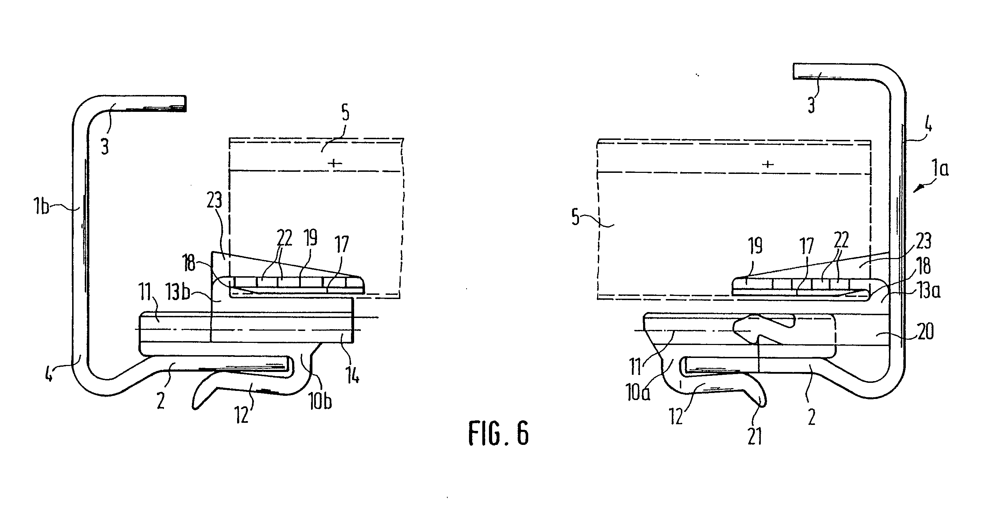

Figur 6     die Darstellung der Fig. 3 in etwas
            abgewandelter Ausführung, und

Figur 7     in der Draufsicht eine Einzelheit aus
            den Fig. 4 bis 6.

In den Fig. 1 und 3 der Zeichnung sind von
einem Durchlaufregal der Einfachheit halber nur die beiden Trägerschienen 1a und 1b gezeigt, welche dessen Beschickungsseite und dessen Entnahmeseite zugeordnet sind. Beide Trägerschienen 1a und 1b haben eine weitestgehend ähnliche Quschnittsform und sind dabei spiegelbildlich zueinander angeordnet. Sie haben jeweils ein im Querschnitt etwa L-förmiges Profil mit einem unteren, waagerechten Schenkel 2 großer Breite, einem oberen, waagerechten SChenkel 3 geringerer Breite und einem diese miteinander verbindenden, aufrechten Steg 4.

Die Trägerschienen 1a und 1b sind in das Durchlaufregal so eingebaut, daß zumindest ihre unteren, waagerechten Schenkel 2 eine übereinstimmende Höhenlage aufweisen. Der obere waagerechte Schenkel 3 der an der Beschickungsseite befindlichen Trägerschiene 1a kann jedoch um ein gewisses Maß höher liegend angeordnet sein, als der obere waagerechte Schenkel 3 der Trägerschiene 1b an der Entnahmeseite.

In die Trägerschienen 1a und 1b sind die Röllchenleisten 5 so eingesetzt, daß sie sich im wesentlichen quer zu den Trägerschienen 1a und 1b erstrecken sowie mit diesen jeweils über eine besondere Befestigungs- und/oder Haltevorrichtung 6a und 6b in Verbindung stehen. Jede dieser Haltevorrichtungen 6a und 6b wirkt dabei mit dem unteren, waagerechten Schenkel 2 der Trägerschienen 1a und 1b zusammen, wie das deutlich den Fig. 1 und 3 der Zeichnung zu entnehmen ist.

Die Röllchenleisten 5 kommen mit einer Längenabmessung 7 zum Einsatz, welche größere bemessen ist als der Abstand 8 zwischen den einander zugewendeten Längskanten der unteren, waagerechten Schenkel 2 beider Trägerschienen 1a und 1b. Dabei sollte jedoch die Längenabmessung 7 der Röllchenleisten 5 nicht oder nur unwesentlich größer bemessen sein als der Abstand 9 zwischen den einander zugewendeten Längskanten der oberen, waagerechten Schenkel 3 beider Trägerschienen 1a und 1b.

Jede Befestigungs- und/oder Haltevorrichtung 6a und 6b benutzt eine in Längsrichtung der Trägerschienen 1a und 1b verlaufende und an deren unterem, waagerechtem Schenkel 2 festlegbare Rasterleiste 10a bzw. 10b. Diese Rasterleiste ist vorzugsweise als Spritzgußformteil aus Kunststoff, bspw. Polypropylen, gefertigt und an ihrer Oberseite mit einer Vielzahl von in ihrem Profil übereinstimmenden Rasteingriffen 11 versehen. Diese Rasteingriffe 11 bestehen dabei vorzugsweise aus hinterschnitten profilierten, oberseitig offenen Nuten, die sich quer zur Längsrichtung der Rasterleiste 10a bzw. 10b erstrecken.

Bewährt hat es sich, die hinterschnitten profilierten Rasteingriffe 11 so zu gestalten, daß sie in ihrem von der Öffnungsseite abgewendeten Bereich eine kreisbogenförmige Begrenzung aufweisen, die sich bspw. über einen Winkelbereich erstreckt, der zwischen 270 und $315_0$ liegt, wie das aus Fig. 2 erkennbar ist.

An die Unterseite jeder Rasterleiste 10a bzw. 10b ist ein hakenförmiges Klemmprofil 12 einstückig angeformt, durch das die Rasterleiste 10a bzw. 10b mit dem unteren, waagerechten Schenkel 2 der Trägerschiene 1a bzw. 1b durch spielfreie Steckverbindung gekuppelt werden kann, wie das den Fig. 1 und 3 zu entnehmen ist.

Ohne besondere Vorbereitung lassen sich auf diese Art und Weise die Rasterleisten 10a bzw. 10b mit den Trägerschienen 1a bzw. 1b kuppeln.

Zwecks Bildung der Befestigungs- und/oder Haltevorrichtungen 6a und 6b werden jeder Röllchenleiste 5 noch besondere Kopfstücke 13a bzw. 13b zugeordnet, und zwar so, daß das Kopfstück 13a am einen Ende der Röllchenleiste 5 und das Kopfstück 13b am anderen Ende der Röllchenleiste 5 vorgesehen ist.

Die Kopfstücke 13a und 13b weisen an ihrer Unterseite jeweils mehrere, bspw. zwei Rastvorsprünge 14 auf, deren Abstand 15 voneinander einem ganzzahligen Mehrfachen, bspw. dem Vierfachen des Abstandes 16 entspricht, welcher zwischen zwei benachbarten Rasteingriffen 11 in den Rasterleisten 10a und 10b vorgesehen ist. Zwischen den von den beiden Rastvorsprüngen 14 gesetzten Rasteingriffen 11 in den Rasterleisten 10a und 10b bleiben daher jeweils drei Rasteingriffe 11 frei, wie das der Fig. 2 zu entnehmen ist.

Jedes Kopfstück 13a bzw. 13b kann über seine Rastvorsprünge 14 mit beliebig auswählbaren Rasteingriffen 11 der Rasterleiste 10a bzw. 10b in lösbaren Halteeingriff gebracht werden, so daß die Möglichkeit besteht, mit ihrer Hilfe die Röllchenleisten 5 entsprechend dem Abstand 16 zwischen den Rasteingriffen 11 an vielen verschiedenen Stellen längs der Trägerschienen 1a und 1b anzuordnen. Der formschlüssige Halteeingriff der Kopfstücke 13a und 13b in den Rasterleisten 10a und 10b ist dabei von solcher Art, daß sich die Kopfstücke 13a und 13b an den Rasterleisten 10a und 10b über deren Breite hinweg begrenzt verschiebbar führen lassen, und zwar jeweils über einen Bereich hinweg, der in Auswärtsrichtung durch die Innenseite der Stege 4 an den Trägerschienen 1a und 1b bestimmt wird, wie das ein Vergleich der Fig. 1 und 3 verdeutlicht.

Zur Verbindung mit der Röllchenleiste 5 ist jedes Kopfstück 13a bzw. 13b oberhalb seiner Rastvorsprünge 14 mit einem Kupplungseingriff 17 für ein Ende der Röllchenleiste 5 begrenzt.

Die Kupplungseingriffe 17 und der Queranschlag 18 jedes Kopfstückes 13a bzw. 13b werden von einem hakenförmigen Klemmlappen 19 bestimmt bzw. gebildet, den das betreffende Kopfstück 13a bzw. 13b oberseitig trägt, wie das in den Fig. 1 bis 3 der Zeichnung deutlich zu sehen ist. Der freie Hakenschenkel des Klemmlappens 19 an den Kopfstücken 13a und 13b ist dabei so angeordnet, daß er sich in entgegengesetzter Richtung zum freien Hakenschenkel des hakenförmigen Klemmprofils 12 an der jeweiligen Rasterleiste 10a bzw. 10b erstreckt (Fig. 1 und 3).

Die beiden Kopfstücke 13a und 13b jedes Kopfstück-Paares 13a/13b weisen eine weitestgehende übereinstimmende Ausbildung auf. Das Kopfstück 13a unterscheidet sich vom Kopfstück 13b lediglich dadurch, daß es an seiner Unterseite zusätzlich mindestens einen zu den Rastvorsprüngen 14 parallelen Schnapphaken 20 trägt, dessen Hakenende 21 mit der inneren Längskante der Rasterleiste 10a als Schubwegbegrenzungsanschlag für das Kopfstück 13a relativ zur Rasterleiste 10a in Wirkverbindung treten kann.

Aus Fig. 2 geht dabei hervor, daß der Schnapphaken 20 etwa mittig zwischen den beiden Rastvorsprüngen 14 an der Unterseite des Kopfstückes 13a sitzt, und zwar so, daß er dort innerhalb eines der Rasteingriffe 11 der Rasterleiste 10a aufgenommen werden kann.

Erkennbar ist aus den Fig. 1 und 3 auch noch, daß das freie Hakenende 21 des Schnapphakens 20 dem freien Ende des hakenförmigen Klemmlappens 19 am Kopfstück 13a zugeordnet ist und daß es dabei in der einen Schiebeestellung (Fig. 1) des Kopfstückes 13a außerhalb des Rasteingriffs 11 vor der Längskante der Rasterleiste 10a zu liegen kommt, während es in der anderen Schiebestellung (Fig. 3) des Kopfstückes innerhalb des Rasteingriffes 11 zu liegen kommt.

Für den Einbau der Röllchenleisten 5 in ein Durchlaufregal werden zunächst die Rasterleisten 10a und 10b von innen nach außen auf die unteren, waagerechten Schenkel 2 der Trägerschienen 1a und 1b aufgeschoben und dort durch die hakenförmigen Klemmprofile 12 fixiert. Daraufhin lassen sich auch mit den Rasterleisten 10a und 10b die Kopfstücke 13a und 13b über die Rasteingriffe 11 und die Rastvorsprünge 14 an den jeweils gewünschten Stellen in verschiebbare Wirkverbindung bringen und zwar so, daß die Kopfstücke 13a und 13b in den Trägerschienen 1a und 1b gegen die Innenseite von deren aufrechten Steg 4 anstoßen.

Nunmehr wird jede Röllchenleiste 5 zunächst mit ihrem einen Ende in den Kupplungseingriff 17 des Kopfstücks 13a eingeschoben, wie das aus Fig. 3 erkennbar ist. Sodann wird das andere Ende der betreffenden Röllchenleiste 5 vor das andere Kopfstück 13b gebracht, so daß dieses sich mit seinem Kupplungseingriff 17 über das benachbarte Ende der Röllchenleiste 5 in die Kupplungsstellung nach Fig. 3 schieben läßt. Nunmehr kann dann die Röllchenleiste 5 gemeinsam mit beiden Kopfstük-

ken 13a und 13b des Kopfstück-Paares 13a/13b aus der Stellung nach Fig. 3 in die Stellung gemäß Fig. 1 nach links geschoben werden, bis das Kopfstück 13b innenseitig wieder gegen den aufrechten Steg 4 der Trägerschiene 1b zur Anlage kommt. Bei dieser Verschiebung gelangt dann das Hakenende 21 des am Kopfstück 13a befindlichen Schnapphakens 20 aus dem Bereich des Rasteingriffes 11 und federt dadurch nach unten vor die innere Längskante des Kopfstückes 10a, wie das die Fig. 1 der Zeichnung zeigt. Mit Hilfe des Schnapphakens 20 und des Kopfstückes 13a wird somit verhindert, daß die Röllchenleiste 5 sich aus der Stellung nach Fig. 1 bis in die Stellung nach Fig. 3 zurückschieben kann.

Mit Hilfe der jeweils aus einer Rasterleiste 10a bzw. 10b und einer größeren Anzahl von Kopfstücken 13a und 13b gebildeten Befestigungs- und/oder Haltevorrichtung 6a und 6b können Röllchenleisten 5 zwischen Trägerschienen 1a und 1b, bspw. von Durchlaufregalen, relativ leicht ein- und ausgebaut, zugleich aber in ihrer Funktionsstellung dauerhaft sicher fixiert werden.

Für die einwandfreie Wirkungsweise der Befestigungs-und/oder Haltevorrichtungen 6a und 6b sind dabei die folgenden Gesichtspunkte besonders wichtig:

Die Rasterleisten 10a und 10b sind über ein an ihrer Unterseite vorgesehenes, hakenförmiges Klemmprofil 12 mit dem waagerechten Schenkel 2 der Trägerschienen 1a und 1b kuppelbar. Die Länge der mit der Rasterleiste 10a bzw. 10b kuppelbaren Kopfstücke 13a bzw. 13b ist kleiner bemessen als der Abstand zwischen der äußeren Längskante der betreffenden Rasterleiste 10a bzw. 10b und der Innenfläche am aufrechten Schenkel 4 des etwa L-förmigen Trägerschienenprofils 1a bzw. 1b. Jedes Kopfstück 10a bzw. 10b trägt oberseitig einen hakenförmigen Klemmlappen 19 als Kupplungseingriff 17 für ein Ende einer Röllchenleiste 5, dessen freier Hakenschenkel sich in entgegengesetzter Richtung zum freien Hakenschenkel des Klemmprofils 12 der Rasterleiste 10a bzw. 10b erstreckt. Jedes Kopfstück 13a bzw. 13b ist auf der zugehörigen Rasterleiste 10a bzw. 10b um ein Maß querverschiebbar, welches die Eingrifftiefe seines hakenförmigen Klemmlappens 19 in das Ende der Röllchenleiste 5 unterschreitet. Jede Röllchenleiste 5 weist eine Länge 7 auf, welche mindestens um den doppelten Verschiebeweg eines Kopfstücks 13a bzw. 13b auf einer Rasterleiste 10a bzw. 10b kürzer bemessen ist als der lichte Abstand zwischen den Innenflächen der aufrechten Schenkel 4 zweier sich gegenüberliegender Trägerschienenprofile 1a und 1b.

Für die Anordnung von Röllchenleisten 5 auf Trägerschienen 1a und 1b von Durchlaufregalen hat es sich darüber hinaus auch als wichtig erwiesen, die der Entnahmeseite des Durchlaufregals zugeordneten Enden der Röllchenleisten 5 über ihr Kopfstück 13b gegen den aufrechten L-Schenkel 4 der dortigen Trägerschiene 1b abzustützen. Die der Beschickungsseite des Durchlaufregals zugeordneten Enden der Röllchenleisten 5 werden hingegen über ihr Kopfstück 13a und dessen Schnapphaken 20 in einem Abstand vom aufrechten L-Schenkel 4 der benachbarten Trägerschiene 1a lösbar lagenfixiert.

In den Fig. 4 bis 6 der Zeichnung ist der Gegenstand der Erfindung im wesentlichen in Übereinstimmung mit den eben beschriebenen Fig. 1 bis 3 gezeigt. Lediglich einige Einzelheiten sind in vorteilhafter Weise weitergebildet worden.

So ist in den Fig. 4 und 6 zu sehen, daß das freie Ende 21 des Schnapphakens 20 gegenüber den Fig. 1 und 3 eine Abänderung nämlich eine Abschrägung aufweist, um einen besseren Begrenzungsanschlag zu gewährleisten.

Auch bewirkt die in den gleichen Figuren erkennbare, gekrümmte Ausbildung des Klemmprofils 12 eine höhere Klemmwirkung. Darüber hinaus wird durch diese gekrümmte Form das Aufschieben der Rasterleisten 10a und 10b auf die Trägerschienen 4 begünstigt.

Den Fig. 6 und 7 ist noch entnehmbar, daß die Seitenkanten des in die Röllchenleisten 5 eiingreiifenden Klemmlappens 19 jeweils sägezahnartige Vorsprünge 22 tragen, die den Röllchenlesten enen verbesserten Halt gewähren.

Die Fig. 4 bis 7 lassen schließlich noch erkennen, daß die Klemmlappen 19 jeweils nahe ihren Seitenkanten auf der Oberseite dreieckförmige Versteifungsrippen 23 tragen. Diese geben den Klemmlappen 19 eine zusätzliche Stabilität und verhindern dessen Wegknicken beim Aufschieben der Röllchenleisten 5.

Liste der Bezugszeichen

| 1a, 1b | Trägerschienen |
|---|---|
| 2 | unterer, waagerechter Schenkel |
| 3 | oberer, waagerechter Schenkel |
| 4 | aufrechter Steg |
| 5 | Röllchenleiste |
| 6a, 6b | Befestigungs- und/oder Haltevorrichtung |
| 7 | Längenabmessung |
| 8 | Abstand |
| 9 | Abstand |
| 10a, 10b | Rasterleiste |
| 11 | Rasteingriffe |
| 12 | hakenförmiges Klemmprofil |
| 13a, 13b | Kopfstücke |
| 14 | Rastvorsprünge |
| 15 | Abstand |
| 16 | Abstand |
| 17 | Kupplungseingriff |
| 18 | Queranschlag |
| 19 | Klemmlappen |
| 20 | Schnapphaken |
| 21 | Hakenende |

**Patentansprüche**

1. Befestigungs- und/oder Haltevorrichtung für Röllchenleisten auf quer dazu verlaufenden Trägerschienen oder dergleichen, insbesondere in Durchlaufregalen, bestehend aus in Längsrichtung der Trägerschienen oder dergleichen verlaufenden und an diesen festlegbaren Rasterleisten, auf denen die Röllchenleisten mit ihren Enden in vorgegebenen Rasteingriffen festlegbar sind, wobei die Rasteingriffe an der Rasterleiste eine in deren Längsrichtung - vorzugsweise gleichmäßig - verteilte Anordnung haben,
**dadurch gekennzeichnet,**
daß zwischen der Rasterleiste (10a und 10b) und dem ihr zugeordneten Ende jeder Röllchenleiste (5) ein Kopfstück (13a oder 13b) vorgesehen ist,
daß jedes Kopfstück (13a oder 13b) an seiner Unterseite mehrere Rastvorsprünge (14) trägt, deren Abstand (15) voneinander jeweils einem ganzzahligen Mehrfachen des Abstandes (16) zwischen zwei benachbarten Rasteingriffen (11) in der Rasterleiste (10a oder 10b) entspricht,
daß jedes Kopfstück (13a oder 13b) über seine Rastvorsprünge (14) mit beliebig auswählbaren Rasteingriffen (11) der Rasterleiste (10a oder 10b) in lösbaren Halteeingriff bringbar sowie darin über die Breite der Rasterleiste (10a oder 10b) hinweg verschiebbar geführt ist,
und daß jedes Kopfstück (13a oder 13b) andererseits oberhalb der Rastvorsprünge (14) mit Kupplungseingriffen (17, 19) für ein Ende der Röllchenleiste (5) versehen ist, die einen Queranschlag (18) für eine Endkante der Röllchenleiste (5) aufweisen.

2. Befestigungs- und/oder Haltevorrichtung nach Anspruch 1 für Trägerschienen mit einem mindestens etwa L-förmigen Profil, auf deren waagerechten Schenkeln die die Enden der Röllchenleisten tragende Rasterleiste festgelegt ist,
**dadurch gekennzeichnet,**
daß die Rasterleiste (10a oder 10b) über ein an ihrer Unterseite vorgesehenes, hakenförmiges Klemmprofil (12) mit dem waagerechten Schenkel (2) der Trägerschiene (1a oder 1b) kuppelbar ist,

daß die Länge der mit der Rasterleiste (10a oder 10b) kuppelbaren Kopfstücke (13a oder 13b) kleiner als der Abstand zwischen der äußeren Längskante der Rasterleiste (10a oder 10b) und der Innenfläche des aufrechten Schenkels (4) des etwa L-förmigen Profils der Trägerschienen (1a oder 1b) bemessen ist, daß jedes Kopfstück (13a oder 13b) oberseitig einen hakenförmigen Klemmlappen (19) als Kupplungseingriff (17) für ein Ende einer Röllchenleiste (5) trägt, dessen freier Hakenschenkel sich in entgegengesetzter Richtung zum freien Hakenschenkel des Klemmprofils (12) der Rasterleiste (10a oder 10b) erstreckt, daß jedes Kopfstück (13a oder 13b) auf der Rasterleiste (10a oder 10b) um ein Maß querverschiebbar ist, welches die Eingrifftiefe seines hakenförmigen Klemmlappens (19) in das Ende der Röllchenleiste (5) unterschreitet, und daß jede Röllchenleiste (5) eine Länge (7) aufweist, welche mindestens um den doppelten Verschiebeweg eines Kopfstücks (13a oder 13b) auf einer Rasterleiste (10a oder 10b) kürzer bemessen ist als der lichte Abstand zwischen den Innenflächen der aufrechten Schenkel (4) zweier sich gegenüberliegender Trägerschienen (1a und 1b).

3. Befestigungs- und/oder Haltevorrichtung nach einem der Ansprüche 1 und 2, **dadurch gekennzeichnet,** daß die Rasterleisten (10a und 10b) und Kopfstücke (13a und 13b) aus bruchfestem Kunststoffmaterial betehen.

4. Befestigungs- und/oder Haltevorrichtung nach einem der Ansprüche 1 bis 3, **dadurch gekennzeichnet,** daß die Rasteingriffe (11) der Rasterleiste (10a oder 10b) aus hinterschnitten profilierten, oberseitig offenen Nuten bestehen, während die Rastvorsprünge (14) an den Kopfstücken (13a oder 13b) von in ihrem Querschnitt hierzu komplementär gestalteten, unterseitigen Profilstegen gebildet sind.

5. Befestigungs- und/oder Haltevorrichtung nach einem der Ansprüche 1 bis 4, **dadurch gekennzeichnet,** daß die Rasteingriffe (11) und die Rastvorsprünge (14) jeweils Hinterschneidungsbereiche mit kreisbogenförmiger Begrenzung aufweisen.

6. Befestigungs- und/oder Haltevorrichtung nach einem der Ansprüche 1 bis 5, **dadurch gekennzeichnet,** daß der Abstand (15) zwischen den Rastvorsprüngen (14) an den Kopfstücken (13a oder 13b) vier Teilungsabständen (16) der Rasteingriffe (11) in der Rasterleiste (10a oder 10b) entspricht.

7. Befestigungs- und/oder Haltevorrichtung nach einem der Ansprüche 1 bis 6, **dadurch gekennzeichnet,** daß mindestens ein Kopfstück (13a) jedes mit einer Röllchenleiste (5) kuppelbaren Kopfstück-Paares (13a/13b) an seiner Unterseite mindestens einen zu den Rastvorsprüngen (14) parallelen Schnapphaken (20) trägt, der mit einer Längskante der Rasterleiste (10a) einen Schubweg-Begrenzungsanschlag (21) für das Kopfstück (13a) relativ zur Rasterleiste (10a) bildet.

8. Befestigungs- und/oder Haltevorrichtung nach einem der Ansprüche 1 bis 7, **dadurch gekennzeichnet,** daß der Schnapphaken (20) im Bereich eines Rasteingriffs (11) der Rasterleiste (10a) liegt und in diesem mit in Richtung von der Untrseite des Kopfstücks (13a) weg wirkender Federvorspannung aufgenommen ist (Fig. 3).

9. Befestigungs- und/oder Haltevorrichtung nach einem der Ansprüche 1 bis 8, **dadurch gekennzeichnet,** daß das freie Hakenende (21) des Schnapphakens (20) dem freien Ende des hakenförmigen Klemmlappens (19) am Kopfstück (13a) zugeordnet ist.

10. Befestigungs- und/oder Haltevorrichtung für Röllchenleisten auf Trägerschienen von Durchlaufregalen nach einem der Ansprüche 1 bis 9, **dadurch gekennzeichnet,** daß die der Entnahmeseite des Durchlaufregals zugeordneten Enden der Röllchenleisten (5) über ihr Kopfstück (13b) gegen den aufrechten L-Schenkel (4) der dortigen Trägerschiene (1b) abgestützt sind, während die der Beschickungsseite des Durchlaufregals zugeordneten Enden der Röllchenleisten (5) über ihr Kopfstück (13a) und dessen Schnapphaken (20, 21) im Abstand vom aufrechten L-Schenkel (4) der benachbarten Trägerschiene (1a) lösbar lagenfixiert sind (Fig. 1).

11. Befestigungs- und/oder Haltevorrichtung nach einem der Ansprüche 1 bis 10, **dadurch gekennzeichnet,** daß das freie Ende (21) des Schnapphakens (20) eine Abschrägung aufweist und das Klemmprofil (12) eine gekrümmte bzw. geknickte Ausbildung hat, daß die Seitenkanten des Klemmlappens (19) mit sägezahnartigen Vorsprüngen (22) versehen sind und daß der Klemmlappen (19) auf seiner Oberseite dreieckförmige Versteifungsrippen (23) trägt (Fig. 4 bis 7).

FIG.1

EP 0 448 003 A1

FIG. 2

FIG. 3

FIG. 4

EP 0 448 003 A1

FIG. 5

FIG. 7

FIG. 6

# EUROPÄISCHER RECHERCHENBERICHT

Nummer der Anmeldung

## EP 91 10 4119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-U-8 704 612  (SCHULZE-BERGE)<br>* Ansprüche 1-3; Figur 1 *<br>– – – | 1-3 | B 65 G 1/08 |
| A | US-A-4 383 614  (MILLER)<br>* Spalte 3, Zeilen 14 - 47; Figuren 1-6 *<br>– – – | 1,3 | |
| D,A | DE-U-8 500 141  (BITO-LAGERTECHNIK BITTMANN)<br>* Figuren 1-7 *<br>– – – | 1,7 | |
| A | US-A-4 765 493  (KINNEY)<br>* Figuren 1-7 *<br>– – – | 1 | |
| A | US-A-3 900 112  (AZZI ET AL.)<br>* Figuren 1-3 *<br>– – – – – | 1 | |

**RECHERCHIERTE SACHGEBIETE (Int. Cl.5)**

B 65 G

Der vorliegende Recherchenbericht wurde für alle Patentansprüche erstellt

| Recherchenort | Abschlußdatum der Recherche | Prüfer |
|---|---|---|
| Berlin | 27 Juni 91 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------
& : Mitglied der gleichen Patentfamilie, übereinstimmendes Dokument